(19) Europäisches Patentamt
European Patent Office
Office européen des brevets

(11) Veröffentlichungsnummer : **0 036 975**
**B1**

(12) # EUROPÄISCHE PATENTSCHRIFT

(45) Veröffentlichungstag der Patentschrift : **13.06.84**

(21) Anmeldenummer : **81101783.9**

(22) Anmeldetag : **11.03.81**

(51) Int. Cl.³ : **C 09 D 3/72**, C 08 G 18/40, C 08 G 18/78, B 05 D 5/06

(54) **Verfahren zur Herstellung von Metalleffektlackierungen und witterungsbeständige Metalleffekt-Mehrschichtlackierungen aufweisende Flächengebilde.**

(30) Priorität : **20.03.80 DE 3010719**

(43) Veröffentlichungstag der Anmeldung : **07.10.81 Patentblatt 81/40**

(45) Bekanntmachung des Hinweises auf die Patenterteilung : **13.06.84 Patentblatt 84/24**

(84) Benannte Vertragsstaaten : **BE DE FR GB IT NL SE**

(56) Entgegenhaltungen :
**FR-A- 1 343 812**
**FR-A- 2 143 798**
**FR-A- 2 216 333**
**FR-A- 2 410 028**
**US-A- 4 020 216**

(73) Patentinhaber : **BAYER AG**
**Konzernverwaltung RP Patentabteilung**
**D-5090 Leverkusen 1 Bayerwerk (DE)**

(72) Erfinder : **Höhlein, Peter, Dr.**
**Windmühlenweg 3e**
**D-4152 Kempen 3 (DE)**
Erfinder : **Uerdingen, Walter, Dr.**
**Humperdinckstrasse 41**
**D-5090 Leverkusen 1 (DE)**
Erfinder : **Peltzer, Bernd, Dr.**
**Sebastian-Kneipp-Weg 15**
**D-4150 Krefeld 1 (DE)**
Erfinder : **Mennicken, Gerhard, Dr.**
**Am Wasserturm 16**
**D-5090 Leverkusen 3 (DE)**

**EP 0 036 975 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von Metalleffekt-Mehrschichtlackierungen einer verbesserten Witterungsbeständigkeit, bei welchem Metalleffekt-Lackierungen mit einem ausgewählten Decklack versehen werden, sowie derartige Mehrschichtlackierungen aufweisende Flächengebilde.

Mehrschichtlackierungen, die aus verschiedenen Lackschichten aufgebaut sind, werden z. B. in der Kraftfahrzeuglackierung eingesetzt. Der die letzte äußere Schicht der Mehrschichtlackierung bildende Klarlacküberzug wird in der Regel eingebrannt. Er wird aus Klarlacken erhalten, die als Filmbildner in der Regel Poly(meth)acrylate bzw. deren Copolymerisate enthalten. Sie werden erhalten durch Copolymerisation von (Meth)acrylsäureestern von monovalenten Alkoholen mit (Meth)acrylsäureestern, die noch funktionelle Hydroxylgruppen enthalten und die gegebenenfalls auch noch andere Comonomere wie Styrol, Vinyltoluol, Vinylester und auch geringe Anteile an carboxylgruppenhaltigen Monomeren einpolymerisiert enthalten. Diese Acrylatharze werden z. B. in Kombination mit Polyisocyanaten in organischen Lösungsmitteln verwendet.

Andere Klarlacke enthalten neben den Polyacrylatharzen auch Alkydharze, die aus Phthalsäuren und Polyolen, die mit verschiedenen Fettsäuren oder anderen Monocarbonsäure modifiziert sind, aufgebaut sind, welche ebenfalls in Kombination mit Polyisocyanaten gehärtet werden können (Temple C. Pattan, Alkyd Resin Technology, Interscience Publishers John Wiley & Sons, New York, London 1962 ; Wagner-Sarx, Lackkunstharze, 4. Auflage, Karl Hanser Verlag, München, 1959 ; Ullmanns Encyclopädie der technischen Chemie, Band 14, Seiten 80-106 (1963)).

Diese bekannten Klarlacke zeichnen sich durch gute Härte und Elastizität aus. Als Überzugslack in einer Mehrschichtlackierung, deren abzudeckende letzte Schicht Metallpigmente enthält, also bei einer Metalleffektlackierung, führen die bekannten Klarlacke nach Bewitterung und nach UV-Licht-Belastung, wie es in sonnenreichen Gebieten der Fall ist, zur Rißbildung. Soweit es sich um Klarlacke aus Acrylatharzen handelt, neigen diese nach der Bewitterung oder nach der Einwirkung von UV-Licht in den Bewitterungstesten auch zur Vermattung, was die Metalleffektlackierung unansehnlich werden läßt.

Die FR-A-1 343 812 beschreibt 2-Komponenten-Polyurethanlacke auf Basis aromatischer oder aliphatischer Polyesterpolyole und organischer Polyisocyanate, die u. a. als Decklack für Holz, Kautschuk, Metalle, Stoffe, Karton, Asbest, Zement, Glas oder Polyvinylchlorid eingesetzt werden können. Die Vorveröffentlichung bestätigt die altbekannte Tatsache, daß aromatenarme Lacke eine geringere Vergilbungstendenz aufweisen als entsprechende aromatenhaltige Systeme. Irgendwelche Hinweise auf die oben genannten speziellen Probleme von Metalleffekt-Lackierungen und deren Lösung sind der Veröffentlichung nicht zu entnehmen.

Die FR-A-2 410 028 befaßt sich mit Metalleffekt-Lackierungen, die als Decklack ein auf Acrylatharzen und Amino-Aldehyd-Harzen basierendes System aufweisen. Irgendwelche Hinweise auf das nachstehend näher beschriebene erfindungsgemäße Verfahren, mit welchem gerade die Nachteile von Decklacken auf Acrylat-Basis überwunden werden, sin dieser Veröffentlichung nicht zu entnehmen.

Aufgabe der Erfindung war es, neue Klarlacke zur Verfügung zu stellen, die sich als Decklack für Metalleffekt-Mehrschichtlackierungen eignen, keine Neigung zur Rißbildung zeigen und den Lackierungen eine bessere Witterungsresistenz verleihen.

Diese Aufgabe konnte erfindungsgemäß dadurch gelöst werden, daß man bei der Herstellung von Metalleffekt-Mehrschichtlackierungen Klarlacke verwendet, deren Bindemittel die nachstehend näher erläuterte Zusammensetzung haben.

Gegenstand der vorliegenden Erfindung ist ein Verfahren zur Herstellung von Metalleffektlackierungen einer verbesserten Witterungsbeständigkeit durch Mehrschichtlackierung beliebiger Substrate unter Verwendung eines Klarlacks als Decklack und eines Metallpigmente enthaltenden Lacks zur Herstellung der, von der Klarlackschicht abgedeckten äußeren Schicht der Mehrschichtlackierung, dadurch gekennzeichnet, daß man als Klarlack einen solchen verwendet, dessen wesentliches Bindemittel ein Zweikomponenten-System aus

a) einer Polykomponente bestehend aus

(i) 5 bis 100 Gew.-% eines aromatenarmen Polyesterpolyols einer zwischen 0 und 150 liegenden Säurezahl und einer zwischen 20 und 300 liegenden Hydroxylzahl, und

(ii) 0 bis 95 Gew.-% eines aromatenarmen, Hydroxylgruppen aufweisenden Polyacrylatharzes einer zwischen 20 und 300 liegenden Hydroxylzahl und

b) einer Biuret- und/oder Isocyanuratgruppen, sowie aliphatisch gebundene, gegebenenfalls mit Blockierungsmittel für Isocyanatgruppen blockierte Isocyanatgruppen aufweisenden Polyisocyanatkomponente

darstellt.

Gegenstand der vorliegenden Erfindung sind auch eine witterungsbeständige Metalleffekt-Mehrschichtlackierung aufweisende Flächengebilde, wobei die Lackierung mindestens aus einer Metallpigmente enthaltenden Lackschicht und einer Decklackschicht besteht, dadurch gekennzeichnet, daß die Decklackschicht durch Beschichten der eine Metallpigmente enthaltenden Lackschicht aufweisenden Flächengebilde mit einem Klarlack und dessen anschließendes Auftrocknen erhalten worden ist, dessen Bindemittel die o. g. Zusammensetzung haben.

Im Rahmen der vorliegenden Erfindung werden unter « Polyesterpolyolen » beliebige, Hydroxylgruppen und Estergruppen aufweisende Verbindungen verstanden, d. h. insbesondere die aus der Polyurethanchemie an sich bekannten gesättigten Polyesterpolyole, Hydroxylgruppen aufweisende, gegebenenfalls ölmodifizierte Alkydharze, Hydroxylgruppen aufweisende, urethanmodifizierte Polyesterpolyole oder Hydroxylgruppen aufweisende, urethanmodifizierte und gegebenenfalls ölmodifizierte Alkydharze. Der Begriff « aromatenarm » bezeichnet im Rahmen der Erfindung solche Polyesterpolyole, deren Säurekomponente zu maximal 20 Gew.-% aus aromatischen Carbonsäuren besteht, bzw. solche Polyhydroxypolyacrylate, welche maximal 20 Gew.-% aromatische Reste aufweisende Monomere in mit nichtaromatischen Monomeren copolymerisierter Form aufweisen. Vorzugsweise kommen erfindungsgemäß aromatenfreie Bindemittelbestandteile a) zum Einsatz, d. h. solche Polyesterpolyole, die keinerlei aromatische Carbonsäuren enthalten bzw. solche Polyhydroxypolyacrylate, die keine aromatischen Monomere in copolymerisierter Form enthalten.

Erfindungswesentlich ist die Verwendung von aromatenarmen Polyesterpolyolen bzw. Polyacrylatpolyolen als Bindemittel bzw. wesentliche Bindemittelkomponente a).

Die für das erfindungsgemäße Verfahren geeigneten Polyesterpolyole weisen im allgemeinen eine zwischen 0 und 150, vorzugsweise zwischen 0 und 50 liegende Säurezahl und eine zwischen 20 und 300, vorzugsweise 40 bis 200 liegende Hydroxylzahl auf. Erfindungsgemäß geeignete Polyesterpolyole sind beispielsweise die in an sich bekannter Weise hergestellten Umsetzungsprodukte von aliphatischen und/oder cycloaliphatischen Polycarbonsäuren bzw. deren Anhydriden oder niedrigen Alkyl- bzw. Hydroxyalkylestern mit überschüssigen Mengen an mehrwertigen, aliphatischen oder cycloaliphatischen Alkoholen. Zur Herstellung dieser Polyesterpolyole geeignete aliphatische oder cycloaliphatische Polycarbonsäuren sind insbesondere solche der Formel

$$R(COOH)_n$$

in welcher

R für einen n-wertigen, gesättigten, aliphatischen Kohlenwasserstoffrest mit 2 bis 18, vorzugsweise 4 bis 8 Kohlenstoffatomen oder einen gegebenenfalls olefinisch ungesättigten cycloaliphatischen Kohlenwasserstoffrest 4 bis 18, vorzugsweise 6 bis 10 Kohlenstoffatomen steht, und

n eine ganze Zahl von 2 bis 4, vorzugsweise 2 bedeutet,

wobei die Carboxylgruppen jeweils mit verschiedenen Kohlenstoffatomen des Restes R verknüpft sind.

Wie bereits dargelegt, können zur Herstellung der Polyesterpolyole anstelle der genannten Carbonsäuren auch deren Anhydride bzw. niedrige Alkyl- bzw. Hydroxyalkylester eingesetzt werden. Die entsprechenden cycloaliphatischen Carbonsäuren sind gegenüber den aliphatischen Carbonsäuren bevorzugt.

Geeignete Carbonsäuren sind beispielsweise Bernsteinsäure, Adipinsäure, Korksäure, 1,18-Octadecan-dicarbonsäure, Cyclobutan-1,3-dicarbonsäure, Cyclohexan-1,2-dicarbonsäure, Cyclohexan-1,3-dicarbonsäure, Cyclohexan-1,4-dicarbonsäure, Tricyclodecan-dicarbonsäure, Endoethylen-hexahydrophthalsäure, Hexahydrophthalsäure, Tetrahydrophthalsäure, 4-Methylhexahydrophthalsäure, Camphersäure, Cyclohexantetracarbonsäure oder Cyclobutantetracarbonsäure. Auch Monocarbonsäuren wie z. B. Benzoesäure können in untergeordneten Mengen mitverwendet werden.

Zur Herstellung der Polyesterpolyole geeignete Alkohole sind beispielsweise aliphatische bzw. cycloaliphatische 2- bis 4-wertige Alkohole des Molekulargewichtsbereichs 62 bis 300, die gegebenenfalls auch Ethersauerstoff-Brücken aufweisen können, wie Ethylenglykol, 1,2-Propylenglykol, Trimethylenglykol, Tetramethylenglykol, Hexamethylenglykol, Neopentylglykol, Diethylenglykol, Triethylenglykol, Dipropylenglykol, Trimethylolethan, Trimethylolpropan, Glycerin, Pentaerythrit, 1,4-Dihydroxy-cyclohexan, 1,3-bzw. 1,4-Bis-(hydroxymethyl)-cyclohexan, 4,4'-Dihydroxy-dicyclohexyl-dimethylmethan, 3,3'-Dimethyl-4,4'-dihydroxy-dicyclohexyl-dimethylmethan oder 4,4'-Bis-(hydroxymethyl)-dicyclohexyl-dimethylmethan. Besonders gut geeignete Polyesterpolyole sind solche auf Basis von 1,4-Bis-(hydroxymethyl)-cyclohexan und/oder auf Basis von 4,4'-Dihydroxy-dicyclohexyl-dimethylmethan.

Neben derartigen einfachen Polyesterpolyolen können als erfindungsgemäße Bindemittelkomponente a) auch urethanmodifizierte Polyesterpolyole eingesetzt werden, d. h. beispielsweise Umsetzungsprodukte der beispielhaft genannten Polyesterpolyole mit unterschüssigen Mengen an organischen Diisocyanaten wie z. B. Isophorondiisocyanat oder Hexamethylendiisocyanat.

Als erfindungsgemäß geeignete Bindemittelkomponente a) sind auch Hydroxylgruppen aufweisende Alkydharze geeignet, vorausgesetzt, daß sie den o. g. Bedingungen bezüglich des Aromatengehalts entsprechen. Auch die an sich bekannten ölmodifizierten Alkydharze des Standes der Technik sind als erfindungsgemäße Bindemittelkomponente a) geeignet, vorausgesetzt, daß sie den eingangs gemachten Bedingungen bezüglich Hydroxylzahl, Säurezahl und Aromatengehalt entsprechen. Ebenso können die entsprechenden urethanmodifizierten Alkydharze als Bindemittelkomponente a) eingesetzt werden.

Die Herstellung der erfindungsgemäß geeigneten Polyesterpolyole erfolgt nach bekannten Verfahren. Diese sind beispielsweise in den einschlägigen Standardwerken beschrieben :

1. Temple C. Pattan, Alkyd Resin Technology, Interscience Publishers John Wiley & Sons, New York, London 1962 ;

2. Dr. Johannes Scheiber, Chemie und Technologie der künstlichen Harze, Wissenschaftliche Verlagsgesellschaft mbH, Stuttgart, 1943 ;

3. Hans Wagner + Hans-Friedrich Sarx, Lackunstharze, 4. Auflage, Karl Hanser Verlag, München, 1959 ;

4. Ullmanns Encyklopädie der technischen Chemie, Band 14, Seiten 80 bis 106 (1963).

Neben den beispielhaft genannten Polyesterpolyolen können in den erfindungsgemäßen Bindemittelkomponenten a) auch Polyacrylat-Polyole einer zwischen 20 bis 300, vorzugsweise 35 bis 200 liegenden Hydroxylzahl und eines osmometrisch bestimmbaren, zwischen 1 000 bis 20 000 liegenden Molekulargewichts verwendet werden. Es handelt sich bei diesen Polyacrylat-Polyolen um an sich bekannte Mischpolymerisate von hydroxylgruppenfreien, olefinisch ungesättigten Monomeren mit aliphatisch gebundene Hydroxylgruppen aufweisenden, olefinisch ungesättigten Monomeren.

Geeignete hydroxylgruppenfreie Monomere sind beispielsweise Styrol, α-Methylstyrol, Ortho- bzw. Para-Chlorstyrol, Ortho-, Metha- oder Para-Methylstyrol, Paratert.-Butylstyrol und gegebenenfalls Mischungen derselben, Acryl- und Methacrylsäure, Alkylester mit 1 bis 8 C-Atomen in der Alkoholkomponente, beispielsweise Ethylacrylat, Methacrylat, N- bzw. Iso-Propylacrylat, N-Butylacrylat, 2-Ethylhexylacrylat, 2-Ethylhexylmethacrylat, Isooctylacrylat, tert.-Butylacrylat, Methylmethacrylat, Ethylmethacrylat, N- bzw. Iso-Propylmethacrylat, Butylmethacrylate, Isooctylmethacrylat, Vinylester von Alkanmonocarbonsäuren wie z. B. Vinylacetat oder Vinylpropionat, Acrylnitril, (Meth)acrylsäureamid, gegebenenfalls Carbonsäuren aufweisende Monomere wie z. B. Mono- und/oder Diester der Fumarsäure, Ithaconsäure oder Maleinsäure mit aliphatischen Alkoholen mit 1 bis 8 Kohlenstoffatomen bzw. Mischungen derartiger Monomerer.

Beispiele geeigneter, aliphatisch gebundene Hydroxylgruppen aufweisender Monomerer sind beispielsweise 2-Hydroxy-ethyl(meth)acrylat, 2-Hydroxypropyl(meth)acrylat, 4-Hydroxybutyl(meth)acrylat, Trimethylolpropanmono(meth)acrylat, Pentaerythritmono(meth)acrylat oder deren Mischungen.

Die Herstellung der Polyacrylat-Polyole — dieser Begriff steht im Rahmen der Erfindung stellvertretend für alle, aliphatische Hydroxylgruppen aufweisenden Copolymerisate, unabhängig von deren Gehalt an Acrylsäure- bzw. Methacrylsäurederivaten — kann durch Copolymerisation der Bestandteile nach üblichen Verfahren erfolgen, wobei der radikalischen Polymerisation in der Schmelze bzw. in Lösung der Vorzug gegeben wird. Die Polymerisation kann bei Temperaturen von 70 bis 160 °C, vorzugsweise 100 bis 150 °C, vorzugsweise 100 bis 150 °C, durchgeführt werden.

Die Monomeren werden im wesentlichen in den gleichen Verhältnissen, wie sie zur Polymerisation eingesetzt sind, in das Copolymerisatharz eingebaut, wobei die einpolymerisierten Einheiten im wesentlichen statistisch verteilt sind.

Bevorzugte Initiatoren zur Durchführung der radikalischen Polymerisation sind z. B. symmetrische aliphatische Azoverbindungen wie Azo-bis-isobuttersäurenitril, Azo-bis-2-methyl-valeronitril, 1,1'-Azo-bis-1-cyclohexannitril und 2,2'-Azo-bis-isobuttersäurealkylester ; symmetrische Diacylperoxide, wie z. B. Acetyl-, Propionyl- oder Butyrylperoxid, Brom-, Nitro-, Methyl- oder Methoxygruppen substituierte Benzoylperoxide sowie Lauroylperoxid ; symmetrische Peroxydicarbonate, wie z. B. Diethyl-, Diisopropyl-, Dicyclohexyl-, sowie Dibenzylperoxidicarbonat ; tert.-Butylperoctoat oder tert.-Butylphenylperacetat sowie Peroxidcarbonate wie tert.-Butyl-N-(phenylperoxi)-carbamat oder tert.-Butyl-N-(2,3-dichlor- oder 4-chlorphenyl-peroxid)carbamat. Weitere bevorzugte Peroxide sind : tert.-Butylhydroperoxid, Di-tert.-Butylperoxid, Cumolhydroperoxid, Di-cumolperoxid und tert.-Butylperpivalat.

Die Initiatoren können in Mengen von 0,2 bis 15 Gew.-%, bezogen auf Gesamtmonomere, eingesetzt werden. Ebenfalls können übliche Regler in Mengen von 0,1 bis 10 Gew.-%, bezogen auf Gesamtmonomere, bei der Polymerisation eingesetzt werden.

Wird die Lösung polymerisiert, so können inerte Lösungsmittel, wie z. B. Ethanol, Propanol, Isopropanol, N- oder Iso-butanol, Methylethylketon, Toluol, Xylol, Essigsäurebutylester, Butylglykol usw. verwendet werden. Darüber hinaus können auch Emulsionspolymerisationen durchgeführt werden.

Gut geeignet sind auch solche Polyhydroxypolyacrylate, die in einem Polyesterpolyol der beispielhaft genannten Art bzw. in einer Lösung eines solchen Polyesterpolyols als Reaktionsmedium hergestellt worden sind. Auf diese Weise ist es, insbesondere bei Verwendung von schwachen Lösungsmitteln, wie z. B. Testbenzin und/oder aromatischen Kohlenwasserstofflösungsmitteln, die für das Polyesterpolyol ein Löser, für das Polyhydroxypolyacrylat jedoch ein Nichtlöser darstellen, möglich, das Polyhydroxypolyacrylat in Form einer Dispersion von Polymermikroteilchen zu erhalten, die im Polyesterpolyol bzw. seiner Lösung stabil dispergiert sind. Die Verwendung derartiger Dispersionen ist beim erfindungsgemäßen Verfahren insbesondere dann möglich, wenn die Aushärtung des Klarlacks unter Hitzeeinwirkung erfolgt. In einem solchen Falle schmelzen die dispergierten Polyhydroxypolyacrylat-Teilchen vor ihrer Vernetzung unter gleichzeitiger homogener Verteilung im Lackfilm, so daß auch in diesem Fall klare Decklackschichten erhalten werden.

Die Copolymerisate können im Anschluß an ihre Herstellung nach einer evtl. vorgenommenen Modifizierung bei Temperaturen von 140 bis 200 °C von flüchtigen Bestandteilen befreit werden. Dies kann z. B. entweder unter Normaldruck in Schlangenrohrverdampfern durch Einblasen eines Inertgases, wie Stickstoff oder Wasserstoff, in Mengen von 0,1 bis 1 $m^3$ auf 1 kg Harzschmelze oder im Vakuum in Ausdampfapparaturen, wie Fallfilmverdampfern, Dünnschichtverdampfern, Schneckenverdampfern, Entspannungsverdampfern oder Sprühverdampfern, erfolgen.

Die erfindungsgemäßen Bindemittelkomponenten a) enthalten im allgemeinen 5 bis 100 Gew.-%, vorzugsweise 10 bis 100 Gew.-% eines oder mehrerer Polyesterpolyole der beispielhaft genannten Art und 0 bis 95 Gew.-%, vorzugsweise 0 bis 80 Gew.-% Polyhydroxypolyacrylat der beispielhaft genannten Art. Neben diesen Komponenten können die Bindemittelkomponenten a) auch noch untergeordnete Mengen an anderen Verbindungen mit gegenüber Isocyanatgruppen reaktionsfähigen Gruppen, insbesondere aliphatisch gebundenen Hydroxylgruppen, enthalten. Hierzu gehören beispielsweise einfache aliphatische oder cycloaliphatische Polyole, der oben bei der Herstellung der Polyesterpolyole beispielhaft genannten Art, die als reaktive Verdünner mitverwendet werden können. Derartige einfache aliphatische Alkohole werden jedoch, falls überhaupt, maximal in einer Menge von bis zu 35 OH-Äquivalentprozent, bezogen auf alle in der Bindemittelkomponente a) vorliegenden, Hydroxylgruppen aufweisenden Komponenten mitverwendet.

Bei der erfindungsgemäßen Bindemittelkomponente b) handelt es sich um Isocyanurat- und/oder Biuretgruppen aufweisende Polyisocyanate mit aliphatisch und/oder cycloaliphatisch gebundenen Isocyanatgruppen, insbesondere solchen auf Basis von Hexamethylendiisocyanat oder auf Basis von 1-Isocyanato-3,3,5-trimethyl-5-isocyanatomethyl-cyclohexan (Isophorondiisocyanat). Die Herstellung der genannten Biuret- und/oder Isocyanuratgruppen aufweisenden Lackpolyisocyanate aus den beispielhaft genannten einfachen Diisocyanaten erfolgt nach an sich bekannten Verfahren des Standes der Technik. Die Herstellung der Biuretgruppen aufweisenden Lackpolyisocyanate kann beispielsweise nach den Verfahren der US-Patentschriften 3 124 605, 3 358 010, 3 903 126, 3 903 127 oder 3 976 622 erfolgen. Die Herstellung von Isocyanuratgruppen aufweisenden erfindungsgemäß als Bindemittelkomponente b) geeigneten Polyisocyanaten kann beispielsweise gemäß US-PS 3 919 218 oder gemäß DE-AS 1 954 093 erfolgen. Es ist auch möglich, die Polyisocyanate in mit Blockierungsmittel für Isocyanatgruppen blockierter Form einzusetzen, obwohl die Verwendung derartiger blockierter Polyisocyanate weniger bevorzugt ist. Geeignete Blockierungsmittel sind z. B. Phenol, ε-Caprolactam, Malonsäurediethylester oder Acetylessigsäure-ethylester.

In den erfindungsgemäß zu verwendenden Klarlacken werden die Bindemittelkomponenten a) und b) vorzugsweise in einem NCO/OH-Äquivalentverhältnis von 0,8 : 1 bis 2,5 : 1, vorzugsweise 0,9 : 1 bis 1,5 : 1, entsprechenden Mengen eingesetzt. In der Praxis bedeutet dies, daß in den Klarlacken, bezogen auf die Gesamtmenge der Komponenten a) und b) im allgemeinen 5 bis 45 Gew.-% der Komponente b) und 95 bis 55 Gew.-% der Komponente a) vorliegen.

Bei den erfindungsgemäßen Klarlacken handelt es sich im allgemeinen um lösungsmittelhaltige Lacke, d. h. die Bindemittelkomponenten a) und b) kommen als Lösung bzw. Dispersion in geeigneten Lacklösungsmitteln wie z. B. Essigsäurebutylester, Methyl-isobutyl-keton, Ethylenglykol-monoethyletheracetat, Xylolen und/oder Testbenzin zum Einsatz. Es ist aber auch denkbar, jedoch keinesfalls bevorzugt, die Bindemittelkomponenten a) bei genügend hoher Säurezahl mit Basen wie z. B. Alkalihydroxiden, Ammoniak, tert.-Aminen oder quaternären Ammoniumbasen zu neutralisieren und in Form wäßriger Lösungen bzw. Dispersionen einzusetzen, in denen die Bindemittelkomponente b) dispergierbar ist. Hierbei ist selbstverständlich die ausschließliche Verwendung von blockierten Polyisocyanaten unerläßlich.

Die erfindungsgemäß zum Einsatz gelangenden Klarlacke können neben den genannten Komponenten auch noch weitere Hilfs- und Zusatzmittel wie z. B. viskositätsregulierende Stoffe, Antischaummittel, Verlaufshilfsmittel, Katalysatoren für die NCO/OH-Additionsreaktion, UV-Absorber wie z. B. Benzotriazole, Oxamide, Benzophenole oder Diphenylacrylonitrilsäureester oder Antioxidantien enthalten.

Die erfindungsgemäß bevorzugten Klarlacke stellen in Lösungsmitteln gelöste bzw. dispergierte Zweikomponenten-Systeme dar, die nach dem Trocknen bei Temperaturen zwischen 0 und 120 °C während einer Zeitdauer von 5 Minuten bis zu 60 Minuten klar durchsichtige, harte elastische Filme bilden, die eine hohe Korrosionsbeständigkeit gegenüber Chemikalien und UV-Licht aufweisen. Besonders hervorzuheben ist, daß die erfindungsgemäß erhältlichen Lackierungen eine äußerst geringe Neigung zur Rißbildung aufweisen.

Die Applikation der Klarlacke erfolgt nach den üblichen Methoden der Lacktechnologie, beispielsweise durch Spritzen, Gießen, Tauchen oder Walzen. Die Lacke werden im allgemeinen in solchen Mengen aufgetragen, daß Trockenfilmstärken der Klarlacke zwischen 0,005 und 0,05 mm resultieren.

Bei der Durchführung des erfindungsgemäßen Verfahrens werden die erfindungsgemäß zu verwendenden Klarlacke zur Herstellung einer Schlußschicht einer Mehrschichtlackierung eingesetzt, deren letzte durch den Klarlack abzudeckende Schicht Metallpigmente enthält. Durch die Beschichtung dieser Schlußschicht mit den erfindungswesentlichen Klarlacken entstehen dann sogenannte Metalleffektlackierungen.

Um beispielsweise auf einem Kraftfahrzeug eine Metalleffektlackierung herzustellen, wird eine Karosse in der Regel zunächst mit einem Elektrotauchgrund anodisch oder kathodisch beschichtet. Nach dem Einbrennen und gegebenenfalls Schleifen dieser Schicht wird ein Füller aufgebracht, der nach dem Einbrennen das Substrat bzw. den Untergrund für die aufzubringende Metalleffektlackierung darstellt.

Auf die Fülleroberfläche wird dann ein das Metallpigment enthaltender Grundlack aufgebracht, der gefärbt sein kann. Es können als Metallpigmente in Form von Pulvern oder Plättchen Aluminium, Messing, Kupfer oder andere Metalle eingesetzt werden. Die Färbung in den verschiedenen Farbtönen erfolgt durch Pigmente und/oder lösliche Farbstoffe. Die Bindemittelbasis des Grundlackes kann

unterschiedlicher Art sein. Es können alle bekannten Materialien eingesetzt werden, vorausgesetzt, sie haben einen guten Verbund zu der darunter befindlichen Schicht und zur darüber aufgebrachten Klarlackschicht.

Jede Schicht der Mehrschichtlackierung wird einzeln zwischengetrocknet. Vorteilhaft ist es jedoch, den Klarlack naß in naß auf den die Metallpigmente enthaltenen Grundlack zu applizieren ohne Zwischentrocknung dieser Grundschicht. Beide Lackschichten werden dann gemeinsam bei einer Temperatur zwischen 0 und 120 °C während einer Trockendauer zwischen 6 und 60 Minuten gehärtet. Im Falle der Verwendung von blockierten Polyisocyanaten wird die Klarlackschicht oft auch durch Einbrennen bei höheren, d. h. bei bis zu 200 °C liegenden Temperaturen eingebrannt.

Eine derartige Mehrschichtlackierung hat eine außergewöhnlich harte, kratzfeste Oberfläche und ist hochelastisch. Die Oberfläche hat einen hohen Glanzgrad und zeigt eine gleichbleibende Glanzbeständigkeit auch nach längerer Zeit. Die Filme sind beständig gegen Chemikalien. Der durch den erfindungsgemäß verwendeten Klarlack abgedeckte Grundlackfilm ergibt verbesserte Beständigkeit gegen atmosphärische Einflüsse wie Feuchtigkeit, Wärme und UV-Licht. Während ein 2-Schicht-Metalleffekt-Aufbau mit einem Klarlacküberzug, der ein Alkydharz auf Phthalsäurebasis mit aromatischen Gruppen enthielt, im WOM-test [Cyclus 17/3] bereits nach 650 Stunden gerissen war, konnte ein erfindungsgemäß hergestellter 2-Schicht-Metalleffekt-Aufbau nach mehr als 2 000 Stunden als einwandfrei angesehen werden.

Die nachfolgenden Beispiele dienen der weiteren Erläuterung der erfindungsgemäßen Verfahrens. Alle Prozentangaben beziehen sich auf Gewichtsprozente, alle Angaben in « Teilen » beziehen sich auf Gewichtsteile.

Beispiel 1

a) Aus 1 455 Teilen Hexahydrophthalsäureanhydrid, 990 Teilen Benzoesäure, 990 Teilen Fettsäure, 728 Teilen Trimethylolpropan und 757 Teilen Pentaerythrit wird durch Veresterung bei 200 °C unter einer Stickstoffatmosphäre ein ölfreier Polyester mit einer Säurezahl von ca. 10, einer Hydroxylzahl von ca. 62 und einer Viskosität entsprechend einer Auslaufzeit (DIN 53211, 50 %ig in Xylol) von 120 bis 130 s hergestellt.

b) Von der 60 %igen Harzlösung im Xylol werden 100 Teile eingewogen und unter Zusatz von 0,5 Teilen eines handelsüblichen Verlaufsmittels auf Polyacrylat-Basis, 5,2 Teile eines Isocyanuratgruppenhaltigen Polyisocyanats auf Basis von Hexamethylendiisocyanat mit einem NCO-Gehalt von ca. 20,7 Gew.-%, als 90 %ige Lösung in Xylol, 0,2 Gew.-Teile Zinkoctoat, 1,0 Gew.-Teile eines handelsüblichen Wärmestabilisators (sterisch gehindertes Phenol) zu einem Klarlack verarbeitet, der unter Zugabe von 25,4 Teilen eines Lösergemischs aus Ethylenglykol-monoethylether-acetat, Butylacetat und Xylol im Verhältnis 2 : 1 : 1 verdünnt wird. Das NCO/OH-Molverhältnis liegt bei 1 : 1.

Beispiel 2

a) In einem mit Rückflußkühler, Heiz-, Kühl- und Dosiervorrichtungen versehenen Glasgefäß werden 1 020 Teile Xylol vorgelegt und auf 110 °C erhitzt. Im Verlauf von 3 Stunden wird unter Stickstoffatmosphäre bei 100 °C eine Mischung aus 1 000 Teilen Methylmethacrylat, 120 Teilen Styrol, 350 Teilen Hydroxypropylmethacrylat, 282 Teilen Butylacrylat und 18 Teilen Mercaptoethanol zudosiert.

Gleichzeitig erfolgt unter getrennter Dosierung innerhalb von 4 Stunden die Zugabe von 70 Teilen tert.-Butylperoctoat in 164 Teilen Xylol.

Anschließend wird 3 Stunden bei 110 °C nachgerührt, auf Rückflußtemperatur (ca. 140 °C) erhitzt und das Reaktionsgut 1 Stunde bei dieser Temperatur gehalten. Nach dem Abdrücken über ein Filter resultiert ein Copolymerisatharz mit einer Viskosität entsprechend einer Auslaufzeit, DIN 53211, 50 %ig in Xylol, von 120 bis 130 s, einem Molekulargewicht MN = 5 430, einem Feststoffgehalt von 60,3 %, und einer OH-Zahl von ca. 46.

Der Festgehalt wurde — wie auch für alle anderen hier beschriebenen Copolymerisatharze — bestimmt, indem 1 g Harzlösung auf einem Metalldeckelchen von 7,5 cm Durchmesser in einer Schichtdicke von ca. 50 µm 1 Stunde im Umlufttrockenschrank auf 80 °C erhitzt wurde.

b) Dieses Copolymerisatharz wird mit dem vorstehend beschriebenen Polyester (Beispiel 1) im Verhältnis 80 Teile Polyester und 20 Teile Copolymerisatharz (jeweils 60 %ige Lösungen) gemischt und wie vorher beschrieben zu einem Klarlack verarbeitet, welcher als Schlußschicht für 2-Schicht-Metallic-Decklacksysteme eingesetzt werden kann. Das resultierende Bindemittel wird mit einem Lösergemisch aus Ethylglykolacetat, Butylacetat und Xylol im Verhältnis 2 : 1 : 1 verdünnt. Das molare NCO/OH-Verhältnis liegt bei 2 : 1.

Beispiel 3 (Vergleichsbeispiel)

a) Das Beispiel 1a) wird hier wiederholt, mit dem Unterschied, daß ein molmäßiger Austausch des Hexahydrophthalsäureanhydrids (1 455 Teile) gegen Phthalsäureanhydrid (1 398 Teile) vorgenommen wird.

Bei analoger Arbeitsweise resultiert ein Polyesterharz mit einer Säurezahl von 8,8, einer Hydroxylzahl von 60, einer Viskosität von 124 s (DIN 53211, 50 %ig in Xylol) und einem Feststoffgehalt von 60,4 %.

b) Analog dem Beispiel 1b) wird aus 100 Teilen der 60 %igen Harzlösung 3a), 0,5 Teilen Verlaufshilfsmittel, 15,0 Teilen isocyanuratgruppenhaltigem Polyisocyanat auf Basis Hexamethylendiisocyanat, 0,2 Gew.-% Zinkoctoat, bezogen auf Bindemittel, als Katalysator und 1,0 Teile Wärmestabilisator gemäß Beispiel 1 ein Klarlack hergestellt, der unter Zusatz von 27,3 Teilen des Lösergemisches aus Beispiel 1 wie beschrieben verdünnt wird. Das molare NCO/OH-Verhältnis liegt bei 1 : 1.

Beispiel 4

a) Aus 1 322 Teilen Hexahydrophthalsäureanhydrid, 80 Teilen Maleinsäureanhydrid, 498 Teilen Adipinsäure, 1 056 Teilen α-Ethylhexansäure und 1 968 Teilen Trimethylolpropan wird durch Veresterung analog Beispiel 1 ein ölfreier Polyester mit einer Säurezahl von ca. 4,5, einer Hydroxylzahl von ca 140, einer Auslaufviskosität von 42 s (50 %ig in Xylol) und einem Festgehalt von 74 % hergestellt.

b) Von der 74 %igen Harzlösung werden 100 Teile eingewogen und unter Zusatz von 0,5 Teilen des Verlaufshilfsmittels, 25,20 Teile eines isocyanuratgruppenhaltigen Polyisocyanats auf Basis Isophorondiisocyanat mit einem NCO-Gehalt von 11,5 % (70 %ig in einem handelsüblichen aromatischen Kohlenwasserstofflösungsmittel), 1,0 Teile Zinkoctoat als Katalysator, 1,0 Teile des Wärmestabilisators aus Beispiel 1 und 26,8 Teilen des Lösergemischs aus Beispiel 1 verdünnt. Das molare NCO/OG-Verhältnis liegt bei 1 : 1.

Beispiel 5

a) Aus 2 345 Teilen Hexahydrophthalsäureanhydrid und 2 429 Teilen Trimethylolpropan wird ein ölfreier Polyester mit einer Säurezahl von ca. 2, einer Hydroxylzahl von ca. 300 und einer Auslaufviskosität von 57 s (50 %ig in Ethylglykolacetat) hergestellt.

b) Aus 100 Teilen der 60 %igen Harzlösung in Xylol, 0,5 Teilen Verlaufshilfsmittel, 47,2 Teilen isocyanuratgruppenhaltigem Polyisocyanat auf Basis Hexamethylendiisocyanat gemäß Beispiel 1, 0,15 Teile Zinkoctoat als Katalysator, 1,0 Teile Wärmestabilisator gemäß Beispiel 1 und 22,3 Teile Lösergemisch gemäß Beispiel 1 wird ein Klarlack hergestellt. Das NCO/OH-Molverhältnis liegt bei 1 : 1.

Beispiel 6

a) In dem in Beispiel 2 beschriebenen Reaktionsgefäß werden 2 175 Teile Butylacetat und 2 175 Teile Xylol vorgelegt und auf 110 °C erwärmt. Im Verlauf von 4 Stunden wird unter Stickstoffatmosphäre bei 110 °C eine Mischung aus 3 951 Teile Methylmethacrylat, 2 908 Teile Butylacrylat, 2 707 Teile Hydroxyethylmethacrylat, 158 Teile Acrylsäure und 335 Teile Mercaptoethanol zudosiert.

Gleichzeitig erfolgt unter getrennter Dosierung innerhalb von 5 Stunden die Zugabe von 591 Teilen tert.-Butylperoctoat.

Anschließend wird 3 Stunden bei 110 °C nachgerührt, auf Rückflußtemperatur ca. 140 °C erhitzt und das Reaktionsgut ca. 1 Stunde bei dieser Temperatur gehalten. Nach dem Abdrücken über ein Filter resultiert ein Copolymerisatharz mit einer Viskosität entsprechend einer Auslaufzeit (DIN 53211, 60 %ig in Xylol) von 267 s, einer Säurezahl von 12 und einer Hydroxylzahl von ~ 120 und einem Feststoffgehalt von 70,1 %.

b) Dieses Copolymerisatharz wird mit dem Polyester aus Beispiel 5 im Verhältnis 90 Teile Copolymerisatharz und 10 Teile Polyester (jeweils 70 %ige Harzlösungen) gemischt und unter Zusatz von 0,5 Teilen Verlaufshilfsmittel gemäß Beispiel 1, 24,7 Teilen isocyanuratgruppenhaltigem Polyisocyanat auf Basis Hexamethylendiisocyanat gemäß Beispiel 1, 0,15 Teilen Zinkoctoat als Katalysator, 1,0 Teilen Wärmestabilisator und 25,6 Teilen eines Lösergemisches aus Ethylglykolacetat, Butylacetat und Xylol im Verhältnis 2 : 1 : 1 (jeweils bezogen auf 100 Teile Copolymerisat + Polyesterharzmischung) zu einem Klarlack verarbeitet. Das molare NCO/OH-Verhältnis liegt bei 1 : 1.

Beispiel 7

a) Aus 1 820 Teilen Camphersäure, 1 238 Teilen Pentaerythrit, 1 180 Teilen Kokosnußöl-Fettsäure und 786 Teilen α-Ethylhexansäure wird ein Alkydharz mit einer Säurezahl von ca. 12, einer Hydroxylzahl von ca. ~ 118 und einer Viskosität von 130 mPas (50 %ig in Xylol, Kugelfallviskosimeter) hergestellt.

b) Aus 100 Teilen der 60 %igen Harzlösung in Xylol, 0,5 Teilen Verlaufshilfsmittel gemäß Beispiel 1, 11,9 Teilen biuretgruppenhaltigen Polyisocyanat auf Basis Hexamethylendiisocyanat gemäß Beispiel 7 (75 %ig in Ethylglykolacetat/Xylol 1 : 1), 0,5 Teilen Zinkoctoat als Katalysator, 1,0 Teilen Wärmestabilisator gemäß Beispiel 1 und 19,8 Teilen des beschriebenen Lösergemisches wird ein Klarlack hergestellt. Das molare NCO/OH-Verhältnis liegt bei 1 : 1.

Beispiel 8

a) Aus 1 731 Teilen 3,6-Endomethylen-hexahydrophthalsäure, 1 279 Teilen Pentaerythrit, 1 219

Teilen Kokosnußöl-Feetsäure und 813 Teilen α-Ethylhexansäure wird ein Alkydharz mit einer Säurezahl von ca. 17, einer Hydroxylzahl von ~125 und einer Viskosität von 790 mPas (50 %ig in Xylol, Kugelfallviskosimeter) hergestellt.

b) Von der 60 %igen Harzlösung in Xylol werden 100 Teile eingewogen und unter Zusatz von 0,5 Teilen eines Verlaufshilfsmittels, 11,0 Teilen isocyanuratgruppenhaltigem Polyisocyanat auf Basis Hexamethylendiisocyanat gemäß Beispiel 1, 0,5 Teilen Zinkoctoat als Katalysator, 1,9 Teilen des Wärmestabilisators gemäß Beispiel 1 und 32,4 Teilen des beschriebenen Lösergemisches zu einem Klarlack verarbeitet. Das molare NCO/OH-Verhältnis liegt bei 1 : 1.

Beispiel 9

a) Aus 1 790 Teilen Hexahydrophthalsäureanhydrid, 1 636 Teilen Trimethylolpropan, 1 004 Teilen Kokosnußöl-Fettsäure und 425 Teilen Benzoesäure wird ein Alkydharz hergestellt, das eine Säurezahl von ca. 10,3, einer Hydroxylzahl von 88 und einer Viskosität von 430 mPas, 50 %ig in Xylol (Kugelfallvislosimeter) aufweist.

Von der 60 %igen Harzlösung in Xylol werden 100 Teile eingewogen und unter Zusatz von 0,5 Teilen Verlaufshilfsmittel gemäß Beispiel 1, 13,9 Teile isocyanuratgruppenhaltigem Polyisocyanat auf Basis Isophorondiisocyanat gemäß Beispiel 4 (70 %ig in aromatischem KW-Lösergemisch, 0,15 Teilen Zinkoctoat als Katalysator, 1,0 Teile des Wärmestabilisators gemäß Beispiel 1 und 26,5 Teilen des beschriebenen Lösergemisches zu einem Klarlack verarbeitet. Das molare NCO/OH-Verhältnis liegt bei 1 : 1.

Beispiel 10

a) Aus 1 440 Teilen Hexahydrophthalsäureanhydrid, 1 272 Teilen Pentaerythrit, 1 081 Teilen Tallöl-Fettsäure und 1 077 Teilen α-Ethylhexansäure wird ein Alkydharz mit einer Säurezahl von ca. 8,9, einer Hydroxylzahl von ~100 und einer Viskosität von 310 mPas (50 %ig in Xylol, Kugelfallviskosimeter) hergestellt.

b) 100 Teile der 60 %igen Harzlösung, 0,5 Teilen Verlaufshilfsmittel gemäß Beispiel 1, 8,83 Teile biuretgruppenhaltiges Polyisocyanat auf Basis Hexamethylendiisocyanat (75 %ig in Ethylglykolacetat/Xylol 1 : 1), 0,5 Teilen Zinkoctoat, 1,3 Teilen des Wärmestabilisators gemäß Beispiel 1 und 24,4 Teilen des beschriebenen Lösergemisches werden zu einem Klarlack verarbeitet. Das molare NCO/OH-Verhältnis liegt bei 1 : 1.

Beispiel 11

a) Aus 2 387 Teilen Hexahydrophthalsäureanhydrid, 566 Teilen Adipinsäure, 540 Teilen Ethylenglykol, 907 Teilen Neopentylglykol und 519 Teilen Trimethylolpropan wird ein ölfreier Polyester mit einer Säurezahl von ca. 9,8, einer Hydroxylzahl von ~108 und einer Viskosität von 720 mPas (50 %ig in Xylol, Kugelfallviskosimeter) hergestellt.

b) 100 Teile der 60 %igen Harzlösung, 0,5 Teile Verlaufshilfsmittel gemäß Beispiel 1, 9,5 Teile isocyanuratgruppenhaltiges Polyisocyanat auf Basis Hexamethylendiisocyanat gemäß Beispiel 1, 0,2 Gew.-% Zinkoctoat, 1,0 Teile Wärmestabilisator und 28,9 Teile Lösergemisch werden zusammen zu einem Klarlack verarbeitet. Das molare NCO/OH-Verhältnis liegt bei 1 : 1.

Beispiel 12

a) Aus 768 Teilen Bernsteinsäure, 951 Teilen Adipinsäure, 2 813 Teilen Perhydrobisphenol-A und 436 Teilen Trimethylolpropan wird ein ölfreier Polyester mit einer Säurezahl von ca. 15, einer Hydroxylzahl von ca. 104 und einer Viskosität von 970 mPas (50 %ig in Xylol, Kugelfallviskosimeter) hergestellt.

b) Aus 100 Teilen der 60 %igen Harzlösung, 0,5 Teilen eines Verlaufshilfsmittels, 16,7 Teilen isocyanuratgruppenhaltiges Polyisocyanat auf Basis Isophorondiisocyanat gemäß Beispiel 4, 0,5 Teilen Zinkoctoat, 1,0 Teilen Wärmestabilisator gemäß Beispiel 1 und 34,6 Teilen Lösergemisch wird ein Klarlack, wie beschrieben, hergestellt. Das molare NCO/OH-Verhältnis liegt bei 1 : 1.

Beispiel 13

a) Aus 1 958 Teilen Hexahydrophthalsäureanhydrid, 795 Teilen Adipinsäure, 487 Teilen Trimethylolpropan, 1 046 Teilen 1,4-Dimethylolcyclohexan, 414 Teilen Propylenglykol und 225 Teilen Ethylenglykol wird ein ölfreier Polyester mit einer Säurezahl von ca. 13,2, einer Hydroxylzahl von ca. 105 und einer Viskosität von 860 mPas (50 %ig in Xylol, Kugelfallviskosimeter) hergestellt.

b) Aus 100 Teilen der 60 %igen Harzlösung, 0,5 Teilen eines Verlaufshilfsmittels gemäß Beispiel 1, 19,3 Teilen isocyanuratgruppenhaltiges Polyisocyanat auf Basis Hexamethylendiisocyanat gemäß Beispiel 1, 0,15 Teilen Zinkoctoat, 1,0 Teilen eines Wärmestabilisators gemäß Beispiel 1 und 31,8 Teilen Lösergemisch wird ein Klarlack, wie beschrieben, hergestellt. Das molare NCO/OH-Verhältnis liegt bei 1 : 1.

Beispiel 14 (Vergleichsbeispiel)

a) In einem mit Rückflußkühler, Heiz-, Kühl- und Dosiervorrichtungen versehenen Gasgefäß werden 5 266 Teile Ethylglykolacetat vorgelegt und auf 115 °C erwärmt. Im Verlauf von 4 Stunden wird unter Stickstoffatmosphäre bei dieser Temperatur eine Mischung aus 2 509 Teilen Styrol, 1 820 Teilen Butylacetat, 1 977 Teilen Hydroxypropylmethacrylat, 104 Teilen Acrylsäure und 220 Teilen Mercaptoethanol zudosiert.

Gleichzeitig erfolgt unter getrennter Dosierung die Zugabe von 390 Teilen tert.-Butylperoctoat und 715 Teilen Ethylglykolacetat, welches innerhalb von 5 Stunden zugegeben wird.

Anschließend wird 3 Stunden bei 115 °C nachgerührt, auf Rückflußtemperatur erwärmt und das Reaktionsgut ca. 1 Stunde bei dieser Temperatur gehalten. Nach dem Abdrücken über ein Filter resultiert ein Copolymerisatharz mit einer Viskosität entsprechend einer Auslaufzeit (DIN 53211, 60 %ig in Ethylglykolacetat) von 145 s, einer Säurezahl von 13, einer Hydroxylzahl von ~ 90 und einem Feststoffgehalt von 80,7 %.

b) Dieses Copolymerisatharz wird mit dem Polyester aus Beispiel 1 im Verhältnis 80 Teile Polyacrylatharz, 20 Teile Polyester (jeweils 80 %ige Lösungen) gemischt und, wie im Beispiel 1 beschrieben, zu einem Klarlack verarbeitet. Das resultierende Bindemittel wird mit einem Lösergemisch aus Ethylglykolacetat und Xylol im Verhältnis 2 : 1 verdünnt.

Die gemäß Beispielen 1 bis 14 hergestellten Klarlacke werden unmittelbar nach ihrer Herstellung zur Herstellung von Decklackschichten auf Metallic-Lackierungen verwendet. Hierzu wird wie folgt verfahren :

30 Prüfbleche werden mit einer Eisenphosphatierung passiviert, mit einer üblichen Elektrotauchlackierung grundiert, die eingebranntwird, dann wird mit einem üblichen Einbrennfüller beschichtet, der ebenfalls eingebrannt wird.

15 der so vorbehandelten Bleche werden mit einem Grundlack auf Basis von Acrylat/Celluloseacetobutyrat/Melamin-Harzen, die 15 verbleibenden Bleche mit einem Grundlack auf Basis von Acrylatharz-Isocyanat-Harzen beschichtet. Beide Grundlacktypen enthalten ein Aluminiumpigment. Anschließend werden die Bleche naß in naß mit den Klarlacken der Beispiele 1 bis 14, welche mit einem Lösungsmittelgemisch aus Xylol/Butylacetat/Ethylglykolacetat im Verhältnis 1 : 1 : 2 auf eine verarbeitungsfähige Konsistenz eingestellt (ca. 20 bis 23 s im Auslaufbecher mit 4 mm Düse) sind, durch Spritzauftrag beschichtet. Nach einer Ablüftzeit von 15 Minuten wird 30 Minuten bei 80 °C in einem Umluftofen gehärtet. Die Versuche werden so durchgeführt, daß die Klarlackschichten jeweils Trockenschichtdicken von 35 bis 40 µm und die gesamte Mehrschichtlackierung eine Trockenschichtdicke von ca. 120 µm aufweist.

Die so beschichteten Tafeln werden in einem klimatisierten Raum bei 23 °C und einer Luftfeuchtigkeit von 50 % 24 Stunden gelagert und dann den folgenden Prüfungen unterzogen :

Weather-O-meter mit Kohlenbogenlampe-Dauerlichteinwirkung, Wechselwirkung : 17 Minuten trocken, dann 3 Minuten Beregnung,

Schwarztafeltemperatur : max. 65 °C.

Beurteilt werden die Platten zum Zeitpunkt der beginnenden Rißbildung.

Die Prüfungsergebnisse sind in der folgenden Tabelle zusammengestellt.

**(Siehe Tabelle, Seite 10 f.)**

Tabelle

| | Klarlack nach Beispiel | | | | | | | | | | | | | |
|---|---|---|---|---|---|---|---|---|---|---|---|---|---|---|
| auf Polyacrylat/Celluloseacetobutyrat-Melamin-Grundlack | 1 | 2 | 3 (Vergleich) | 4 | 5 | 6 | 7 | 8 | 9 | 10 | 11 | 12 | 13 | 14 (Vergleich) |
| Weather-O-meter (Kohlenbogenlampe) | | | | | | | | | | | | | | |
| gerissen nach Stunden | >2000 | >2000 | <650 | ← | | | | | | >2000 | | | → | <800 |
| auf Polyacrylat/Isocyanat-Grundlack | | | | | | | | | | | | | | |
| Weather-O-meter (Kohlenbogenlampe) | | | | | | | | | | | | | | |
| gerissen nach Stunden | >2000 | >2000 | <650 | ← | | | | | | >2000 | | | → | <800 |

## Ansprüche

1. Verfahren zur Herstellung von Metalleffektlackierungen einer verbesserten Witterungsbeständigkeit durch Mehrschichtlackierung beliebiger Substrate unter Verwendung eines Klarlacks als Decklack und eines Metallpigmente enthaltenden Lacks zur Herstellung der, von der Klarlackschicht abgedeckten äußeren Schicht der Mehrschichtlackierung, dadurch gekennzeichnet, daß man als Klarlack einen solchen verwendet, dessen wesentliches Bindemittel ein Zweikomponenten-System aus

a) einer Polykomponente bestehend aus

(i) 5 bis 100 Gew.-% eines aromatenarmen Polyesterpolyols einer zwischen 0 und 150 liegenden Säurezahl und einer zwischen 20 und 300 liegenden Hydroxylzahl, und

(ii) 0 bis 95 Gew.-% eines aromatenarmen, Hydroxylgruppen aufweisenden Polyacrylatharzes einer zwischen 20 und 300 liegenden Hydroxylzahl und

b) einer Biuret- und/oder Isocyanuratgruppen, sowie aliphatisch gebundene, gegebenenfalls mit Blockierungsmittel für Isocyanatgruppen blockierte Isocyanatgruppen aufweisenden Polyisocyanatkomponente darstellt.

2. Verfahren gemäß Anspruch 1, dadurch gekennzeichnet, daß man als Bindemittelkomponente a) sowohl Polyester- als auch Polyacrylat-Polyole verwendet, wobei das Polyacrylat-Polyol in Form einer stabilen Dispersion von Polymermikroteilchen in einer Lösung des Polyesterpolyols in einem Lacklösungsmittel zum Einsatz gelangt.

3. Verfahren gemäß Anspruch 1 bis 2, dadurch gekennzeichnet, daß man den Klarlack naß in naß auf die Pigmente und/oder Metallpigmente enthaltende Lackschicht aufbringt und beide Schichten gemeinsam trocknet.

4. Eine witterungsbeständige Metalleffekt-Mehrschichtlackierung aufweisende Flächengebilde, wobei die Lackierung mindestens aus einer Metallpigmente enthaltenden Lackschicht und einer Decklackschicht besteht, dadurch gekennzeichnet, daß die Decklackschicht durch Beschichten der eine Metallpigmente enthaltenden Lackschicht aufweisenden Flächengebilde mit einem Klarlack und dessen anschließendes Auftrocknen erhalten worden ist, dessen Bindemittel die in Anspruch 1 genannte Zusammensetzung hat.

## Claims

1. Process for the production of metal effect lacquerings having improved weather resistance by multilayered lacquering of any substrates, using a clear lacquer as top coat and a lacquer containing metal pigments for producing the outer layer of the multi-layered lacquering, covered by the clear lacquer layer, characterised in that the clear lacquer used is one in which the main binder is a 2-component system of

a) a polycomponent consisting of

(i) 5 to 100 % by weight of a polyester polyol low in aromatic content and having an acid number of from 0 to 150 and a hydroxyl number of from 20 to 300 and

(ii) 0 to 95 % by weight of a hydroxyl group-containing polyacrylate resin low in aromatic content and having a hydroxyl number of from 20 to 300, and

b) a polyisocyanate component containing biuret and/or isocyanurate groups as well as aliphatically bound isocyanate groups optionally blocked with blocking agents for isocyanate groups.

2. Process according to Claim 1, characterised in that both polyester polyols and polyacrylate polyols are used as binder component a), the polyacrylate polyol being used in the form of a stable dispersion of polymer micro particles in a solution of the polyester polyol in a lacquer solvent.

3. Process according to Claims 1 to 2, characterised in that the clear lacquer is applied wet in wet to the lacquer layer containing pigments and/or metal pigments, and the two layers are dried together.

4. Sheet structures having a weather resistant metal effect multi-layered lacquering, the lacquering consisting at least of 1 lacquer layer containing metal pigments and a layer of top coat lacquer, characterised in that the layer of top coat lacquer has been obtained by applying a coating of clear lacquer to a sheet structure carrying a lacquer layer containing metal pigments, and subsequently drying said clear lacquer whose binder has the composition indicated in Claim 1.

## Revendications

1. Procédé de préparation de peintures métallisées ayant une meilleure résistance aux intempéries, par applications sur des substrats quelconques d'une peinture multicouche avec utilisation d'un vernis limpide comme vernis de finition et d'une peinture contenant des pigments métalliques pour la préparation de la couche externe de la peinture multicouche, recouverte par la couche de vernis limpide, procédé caractérisé en ce qu'on utilise comme vernis limpide un vernis dont le liant essentiel représente un système à deux constituants, formé de :

a) un polycomposant, consistant en :

(i) 5 à 100 % en poids d'un polyesterpolyol pauvre en fragments aromatiques, ayant un indice d'acide compris entre 0 et 150 et un indice d'hydroxyle compris entre 20 et 300, et

(ii) 0 à 95 % en poids d'une résine polyacrylique présentant les groupes hydroxyles, pauvre en fragments aromatiques, ayant un indice d'hydroxyle compris entre 20 et 300, et

b) un composant polyisocyanate, présentant des groupes biuret et/ou isocyanurates, ainsi que des groupes isocyanates liés à des fragments aliphatiques et éventuellement bloqués par des agents de blocage des groupes isocyanates.

2. Procédé selon la revendication 1, caractérisé en ce qu'on utilise comme constituants a) du liant aussi bien des polyesterpolyols que des polyacrylates-polyols en utilisant le polyacrylate-polyol sous forme d'une dispersion stable de microparticules polymères dans une solution du polyesterpolyol dans un solvant pour vernis.

3. Procédé selon la revendication 1 ou 2, caractérisé en ce qu'on applique le vernis limpide humide sur la couche de peinture humide contenant des pigments et/ou des pigments métalliques et l'on sèche ensemble les deux couches.

4. Objet plat présentant une peinture multicouche métallisée résistant aux intempéries, la peinture appliquée consistant au moins en une couche de peinture contenant des pigments métalliques et une couche de vernis de finition ou de couverture, objet caractérisé en ce que la couche de vernis de finition a été obtenue par enduction des objets plats, présentant une couche de peinture contenant des pigments métalliques, par un vernis limpide et son séchage subséquent, vernis dont le liant a la composition indiquée à la revendication 1.